Europäisches Patentamt

European Patent Office

Office européen des brevets

(19)

(11)  EP 1 062 658 B1

(12)  **EUROPEAN PATENT SPECIFICATION**

(45) Date of publication and mention
of the grant of the patent:
**11.12.2002  Bulletin 2002/50**

(51) Int Cl.[7]: **G10L 15/02**

(86) International application number:
**PCT/DK99/00128**

(21) Application number: **99907338.0**

(22) Date of filing: **12.03.1999**

(87) International publication number:
**WO 99/048085 (23.09.1999 Gazette 1999/38)**

(54) **A SIGNAL PROCESSING METHOD TO ANALYSE TRANSIENTS OF SPEECH SIGNALS**

SIGNALVERARBEITUNGSVERFAHREN ZUR ANALYSE VON SPRACHSIGNAL-TRANSIENTEN

PROCEDE DE TRAITEMENT DE SIGNAUX POUR L'ANALYSE DES TRANSITOIRES DE SIGNAUX
VOCAUX

(84) Designated Contracting States:
**AT BE CH DE DK ES FI FR GB IE LI NL SE**

(30) Priority: **13.03.1998  DK 36198**

(43) Date of publication of application:
**27.12.2000  Bulletin 2000/52**

(73) Proprietor: **LEONHARD, Frank Uldall
2800 Lyngby (DK)**

(72) Inventor: **LEONHARD, Frank Uldall
2800 Lyngby (DK)**

(74) Representative: **Sigh, Erik et al
Hofman-Bang Zacco A/S
Hans Bekkevolds Allé 7
2900 Hellerup (DK)**

(56) References cited:
**WO-A-94/25958**

• **BARRETT T W: "The cochlea as Laplace
analyzer for optimum (elementary) signals"
ACUSTICA, FEB. 1978, WEST GERMANY, vol. 39,
no. 3, pages 155-172, XP002105445 ISSN
0001-7884**
• **HARBOR R D ET AL: "THE LAPLACE
TRANSFORM" ENERGY AND INFORMATION
TECHNOLOGIES IN THE SOUTHEAST,
COLUMBIA, APRIL 9 - 12, 1989, vol. 1, 9 April
1989, pages 376-379, XP000076824 INSTITUTE
OF ELECTRICAL AND ELECTRONICS
ENGINEERS**
• **HALIJAK C A ET AL: "Simple consequences of
the finite time Laplace transform analysis of the
periodically reversed switched capacitors"
CIRCUITS, SYSTEMS, AND SIGNAL
PROCESSING, 1985, USA, vol. 4, no. 4, pages
503-515, XP002105446 ISSN 0278-081X**
• **CELEBI S ET AL: "Analysis of spectral feature
extraction using the gamma filter" 1994 IEEE
INTERNATIONAL CONFERENCE ON NEURAL
NETWORKS. IEEE WORLD CONGRESS ON
COMPUTATIONAL INTELLIGENCE (CAT.
NO.94CH3429-8), PROCEEDINGS OF 1994 IEEE
INTERNATIONAL CONFERENCE ON NEURAL
NETWORKS (ICNN'94), ORLANDO, FL, USA, 27
JUNE-2 JULY 1994, pages 4497-4501 vol.7,
XP002105447 ISBN 0-7803-1901-X, 1994, New
York, NY, USA, IEEE, USA**

**Description**

The present invention relates to a method for determination of a parameter of a system generating a signal containing information about the parameter.

The method may be used for identification of sound or speech signals, such as in speech recognition, or for quality measurement of audio products or systems, such as loudspeakers, hearing aids, telecommunication systems, or for quality measurement of acoustic conditions. The method of the present invention may also be used in connection with speech compression and decompression in narrow band telecommunication.

The method may also be used in analysis of mechanical vibrations generated by a manufactured device during operation e.g. for detection of malfunction of the device.

The method may further be used in electrobiology for example for analysis of neuroelectrical signals such as analysis of signals from an electroencephalograph, an electromyograph, etc.

The three documents:

HALIJAK C A et al.: "Simple Consequences of the Finite Time Laplace Transform Analysis of the Periodically Reversed Switched Capacitors", CIRCUITS, SYSTEMS, AND SIGNAL PROCESSING, 1985, USA, vol. 4, no. 4, pages 503-511, XP-002105446, ISSN 0278-081X;

BARRETT T W: "The Cochlea as Laplace Analyzer for Optimum (Elementary) Signals", ACUSTICA, Feb. 1978, WEST GERMANY, vol. 39, no. 3, pages 155-172, XP-002105445, ISSN 0001-7884; and

HARBOR R D et al.: "THE LAPLACE TRANSFORM", ENERGY AND INFORMATION TECHNOLOGIES IN THE SOUTHEAST, Columbia, April 9-12, 1989, vol. 1, 9 April 1989, pages 376-379, XP-000076824, IEEE;

offer relevant background art as regards the Laplace transform.

Prior art methods of signal processing are based on a short time Fourier transform of signals and it is assumed that the signals are steady state signals.

In steady state analysis the signal is assumed stationary in the period the signal is analysed and the steady state spectrum is calculated.

In real life steady state signals do not occur and steady state analysis does not provide sufficient knowledge of phenomena within various scientific and technological fields. Consider for example speech analysis. The human ear has the ability to simultaneously catch fast sound signals, detect sound frequencies with great accuracy and differentiate between sound signals in complicated sound environments. For instance it is possible to understand what a singer is singing in an accompaniment of musical instruments.

It is assumed that the cochlea in the human ear can be regarded as comprising a large number of band-pass filters within the frequency range of the human ear.

The time response f(t) for one band-pass filter due to an excitation can be separated into two components, the transient response, $f_t(t)$, and the steady state response, $f_s(t)$, $f(t)=f_t(t)+f_s(t)$.

Traditional signal processing is based on the steady state response $f_s(t)$, and the transient response $f_t(t)$ is assumed to vanish very fast and to be without importance for the perception, see for example "Principles of Circuit Synthesis", McGraw-Hill 1959, Ernest 5. Kuh and Donald O. Pederson, page 12, lines 9-15, where it is stated that:

"only the forced response is considered while the response due to the initial state of the network is ignored".

Thus, when students are introduced to the world of signal analysis, they learn that the transient response, i. e. the response due to the initial state of the network should be ignored because it vanishes within a very short period of time. Furthermore, it is rather difficult to analyse these transient signals by use of traditional linear methods of analysis.

The ability of the human ear to hear very short sounds and at the same time detect frequencies with great accuracy is in conflict with the traditional filterbased spectrum analysis. The time window (twice the rise time) of a band-pass filter is inversely proportional to the bandwidth, $tw=2/(f_u-f_l)$, where $f_l$ is the lower cut-off frequency and $f_u$ is the upper cut-off frequency.

Thus, if a rise time of 5 ms is required the consequence is that the frequency resolution is no better than 400 Hz.

As the detection of these transients is in conflict with a high frequency resolution, the detecting by the human ear of these transients must take place in an alternative manner. It has not been examined how the human ear is able to detect these signals, but it might be possible that the cochlea, when no sounds are received, is in a position of rest, where the cochlea will be very broad-banded. When a sound signal is received, the cochlea may start to lock itself to the frequency component or components within the signal. Thus, the cochlea may be broad-banded in its starting position, but if one or more stable frequencies are received the cochlea may lock itself to this frequency or these frequencies with a high accuracy.

Today it is known that the nerve pulses launched from the cochlea are synchronized to the frequency of a tone if the frequency is less than about 1.4 kHz. If the frequency is higher than 1.4 kHz the pulses are launched randomly and less than once per cycle of the frequency.

Signal processing based on filter bank spectrum analysis is disclosed in GB 2 213 623, which describes a system for phoneme recognition. This system comprises detecting means for detecting transient parts of a voice signal, where the principal object of the transient detection is the detection of a point where the speech spectrum varies most sharply, namely, a peak point. The detection of the peak points is used for more precise phoneme segmentation. The transient analysis of GB 2213623 is based on a spectrum analysis and the change in the spectrum, which is very much different to the transient analysis of the present invention, which is based on a direct transient detection in the time domain.

The present invention provides an approach, which is different in principle from all known methods for processing signals. The approach taken and some of the results obtained will be explained by of an example in the context of analysis of speech signals.

Speech is produced by means of short pulses generated by the vocal chords in the case of voiced speech and by friction in the vocal tract in the case of unvoiced speech. The pulses are filtered by the vocal tract that acts as a time-varying filter. The output response will consist of quasi steady state terms and also transient terms. The quasi steady state terms will only be damped slightly in the period before the next pulse is generated. The transient terms will be sufficiently damped in the time period before the next pulse is generated.

The speech signal is often assumed to have only quasi steady state terms in the period or time window of the analysis, typically 20-30 ms.

The placement of formants, the formants being energy bands in the short time power spectrum, are calculated by means of a short time spectrum analysis has previously been assumed decisive for speech intelligibility, together with voiced/unvoiced detection, the pitch and the quasi steady state power.

However, a number of observations, which has been performed within the field of auditory perception research, does not conform to the previous assumptions:

Why is it possible to understand and identify a deep male voice through communication channels that have a higher cut-off frequency than the male pitch.

The only difference between the pronunciation of the letters: e, b, d is in the first 1-3 ms of the voice signal and this information will be lost if the analysis have a time window of 20-30 ms.

How can the absolute placement of these formants be decisive when their placement is quite different for different people, particularly between small children and large males.

Why is distortion dominated by odd order harmonics and caused by cross-over distortion in a class B amplifier much more disturbing than distortion dominated by even order harmonics caused by amplitude distortion in a class A amplifier.

The short time power spectrum will not distinguish frequencies from different sources, and tones generated by other sources than the speech signal will act like false formants.

Why does a signal consisting of three tones with the same frequencies as the formants for a vowel not give the slightest perception of the vowel at all? The signal just sounds like three separate tones.

Why is the ear very sensitive to frequency changes of a signal up till about 1000 Hz, changes of +/- 3 Hz can be detected. For frequencies above 1000 Hz, the sensitivity is much smaller.

The research performed by the present applicant leads to suggest that the ear is tone dominant until about 1.4 - 1.6 kHz and transient dominant above. Tone dominant means that the pulses launched from the hair cells as a response to a tone signal are synchronised to the tone signal. Transient dominant means, in the present context, that the hair cells are activated by changes of the energy with rise and fall times of at most 2 ms typical caused by transient pulses.

Regarding speech signals, it is assumed that the quasi steady state terms are in the tone dominant interval of the ear and that the transient terms are in the transient dominant interval. It is believed that the transient terms are very important for speech intelligibility. The transient terms are seen as transient pulses in the speech signal. The rise time and the shape of leading and lagging edges of the envelope of transient pulses in the terms of a profile of damped frequencies describes the sound picture. The shape of the leading and lagging edges, the dynamic changes, change of amplitude, of the transient pulses, voiced/unvoiced detection and the changes of pitch are decisive for speech recognition.

This approach provides a number of advantages with respect to explaining the earlier mentioned speech perception observations.

A natural explanation as to why it is possible to understand and identify a deep male voice through communication channels that have a higher cut-off frequency than the male pitch is provided. The pitch can be detected as the period between transient pulses.

The absolute placement of formants is not decisive. The damped frequencies profile of the shape of the transient pulse envelope is dominated by damped difference frequencies of the transient terms.

Distortion caused by cross-over distortion in a class B amplifier generates abrupt energy changes (unwanted transients) which are much more disturbing than distortion caused by amplitude distortion in a class A amplifier which do not generate the same abrupt energy changes.

Robust data- or telecommunication is based on modulation. The envelope of transient pulses is a kind of amplitude modulation, transient or impulse response modulation, and will have the same advantages.

It is unlikely that frequencies from other sources will cause interference patterns with the speech signal that gives energy changes with time constants and shapes in the range that is decisive for speech intelligibility. This means that transient modulation will be robust in noisy environments and communication channels.

The ear is probably very sensitive to changes of a frequency up till about 1000 Hz because the nerve pulses are synchronised to the frequency and the period between the pulses is a measure for the frequency. In the high frequency range, where the pulses are not synchronised to the frequency, only placement of the frequency in the cochlea is a measure for the frequency.

According to the invention it has for example been found that the signal information relevant to recognition of speech is present in a transient part of the speech signal. Thus, the method of the present invention may involve a separation of the transient part of an auditory signal, a generation of a transient pulse corresponding to the transient part, and analysis of the shape of the pulse. In an auditory signal, the corresponding transient pulse may be repeated with time intervals, and the time interval of these periodic transient pulses is normally also analysed or determined

In real life, the human ear reacts to energy changes at high frequencies in order to recognise phonemes or sound pictures. But in the present method transient pulses corresponding to the energy changes observed by the ear are extracted at these high frequencies, wherefore the transient pulses preferably are transformed to the low frequency range still maintaining the distinct features of the sound pictures or phonemes. Thus, by using the principles of the invention, it is possible to obtain distinct features within auditory signals by examining the transformed low frequency signals.

The invention relates to the use of the shape of energy changes of a signal for identifying or representing features of the system generating the signal for example in recognition of sound features which can be perceived by an animal ear such as a human ear as representing a distinct sound picture are determined.

The method of the present invention provides an expression for the transient conditions of the auditory signal. The method comprises a band-pass filtration of an auditory signal within the frequency range of the human ear and a detection of a low-pass filtered envelope, which envelope then can be analysed with known methods of signal analysis. The envelope is an expression of the transient part of the signal.

The method of signal analysis, which should be used when analysing the envelope, and the characteristics of the band-pass filter, which should be selected, will depend on the purpose of the analysis. The purpose may be speech recognition, quality-measurement of audio products or acoustic conditions, and narrow band telecommunication.

The invention also relates to a system for processing a signal to reduce the bandwidth of the signal with substantial retention of the information of the signal. The system may further comprise means for extracting the transient component of the auditory signal, and it may comprise means for detecting an envelope of the transient component.

A signal may be separated into a sum of impulse responses generated by poles and zeroes in the system that has generated the signal, if the time between the excitation pulses are sufficient long compared to the duration of the impulse responses for the system.

In WO 94/25958 it is shown that the envelope of the transient component in a speech signal is very important for its recognition and it is shown that the envelope of the impulse response will contain exponential functions and difference frequencies defined by the impulse response.

A method based on damped sinus functions to extract important features from the envelope signal is described, and examples where the method is used on speech signals shows that the features are important in speech analysis.

Before entering into a more detailed explanation of features of the method of the invention, a few definitions will be given:

In short time analysis the transient component in a signal is a matter of definition. For auditory signals, the idea is to obtain an expression that gives a response corresponding to the response in the cochlea to an abrupt change in the signal energy. An abrupt change in the signal energy corresponds to the transient component in the auditory signal. Thus, in the present context, the term "transient component" designates any signal corresponding to an abrupt energy change in an auditory signal. The transient component holds the signal information to be analysed and in order to analyse this information the transient component may be transformed to a corresponding transient pulse having a distinct shape. Thus, in the present context, the term "transient pulse" refers to a pulse having a distinct shape and substantially holding the information of the transient component of the auditory signal and thus corresponding to an abrupt change in the energy of the auditory signet. As mentioned above the transient part of a sound signal may be repeated with time intervals and thus, in the present context, the term "periodic" when used in combination with a transient component, response or pulse designates any transient component, response or pulse being repeated with intervals.

The term "shape" designates any arbitrary time-varying function (which is time-limited or not time-limited) and which, within a given time interval $T_p$ has a distinctly different amplitude level in comparison with the amplitude level outside the interval. Thus, $T_p$ is the duration of the shape function when the shape function is time-limited, or the duration of the part of the function which has a distinctly different amplitude level in comparison with the amplitude level outside the time interval.

In order to extract information from the shape of the energy changes, one broad aspect of the invention relates to represent the shape of the energy changes by the short time Laplace transform of a transient pulse of the signal. However, several methods can be applied in order to obtain a transient pulse corresponding to the change in energy, but it is preferred that an envelope detection is being used, where the envelope preferably should be detected from a transient response of the energy change in the auditory signal.

The energy change representing the distinct sound picture can be a phoneme or vowel or any other sound which gives a sudden energy change in an auditory signal.

It is also an aspect of the invention to provide a method for identifying, in an auditory signal, energy changes which can be perceived by an animal ear such as a human ear as representing a distinct sound picture, the method comprising comparing the shape of energy changes of the signal with predetermined energy change shapes representing distinct sound pictures. For the identification it is preferred that the shape of the energy changes are represented by the shape of a transient pulse of the signal, and it is furthermore preferred that the shape of the transient pulse should be obtained by an envelope detection of a transient response of the energy change in the auditory signal.

The invention also relates to a method for processing a signal so as to reduce the bandwidth of the signal with substantial retention of the information of the signal, comprising extracting a transient part of the signal. The method may further comprise detecting an envelope of the transient part of the signal.

Known methods of processing signals are based on a short time Fourier transform of signals, and it is assumed that the signals are steady state signals.

In steady state analysis the signal is assumed stable in the period the signal is analysed, and the steady state spectrum is calculated.

In WO 94/25958 it is disclosed that transient pulses are important for speech coding and decoding in narrow band communication, for speech recognition and synthesis, and for sound quality in auditory products (i.e. loudspeakers, amplifiers and hearing aids).

An important part of a transient signal is the exponential functions or damping ratios or time constants. The damping ratio is the reason that the impulse response has a finite duration. The fact that the transient signal is important for auditory perception indicates that the response from the hair cells is dependent on the time constants. If this is the case, it is possible that the damping ratios in the response from nerve cells in general are important for the human nerve system.

Transient signals are also important in many other applications, among others signals generated by impacts from defects in rolling bearings and gearboxes.

Based on the transient signal, it is possible to determine the natural time constants and frequencies in the system generating the signal. Further it is possible to determine the excitation pulses of the system.

Fig. 1        shows a time-domain representation of a linear time-invariant system,

Fig. 2        shows the impulse response of a Butterworth low-pass filter of 3. order and a cut-off frequency at 700 Hz,

Fig. 3        shows the response with the filter relaxed for $t < 0$ and with a 4000 Hz tone as input at $t \geq 0$,

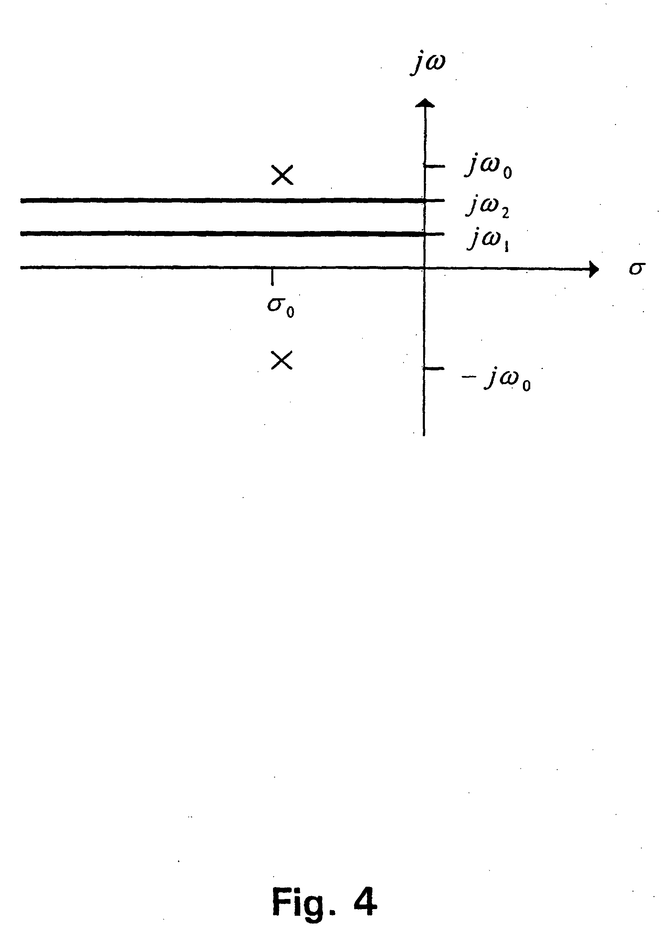

Fig. 4        shows the s-plane with poles and the zero for $H(\sigma,\omega)$,

Fig. 5        shows $H(\sigma,\omega)$ for $\omega_1$ and $\omega_2$ analysed parallel with the $\sigma$ axis,

Fig. 6        shows transient characteristics in speech signals,

Figs. 7-12    show processed speech signals,

Fig. 13        shows a schematic of a filter bank according to the present invention.

DETAILED DESCRIPTION OF THE DRAWINGS

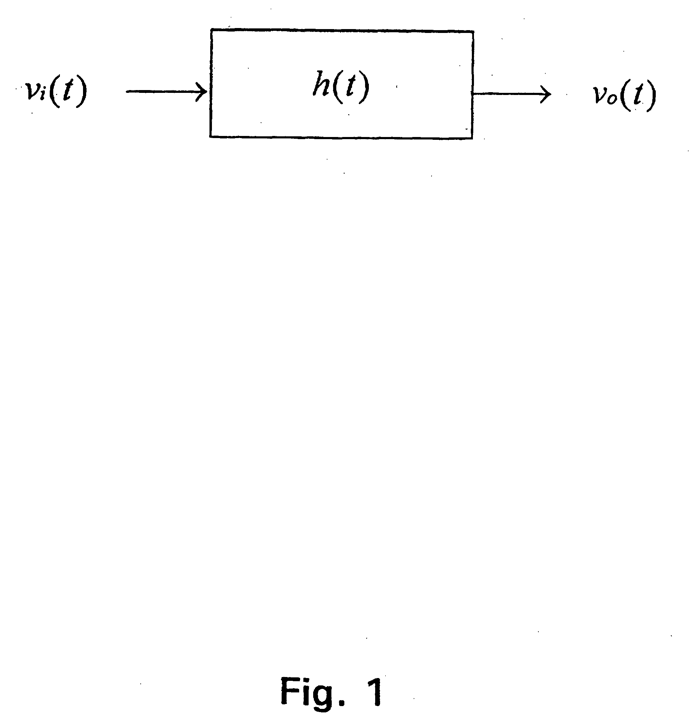

The importance of the transient part of a signal has been an overlooked phenomenon in signal analysis.
The response of a linear system to either an impulse or a step function is defined by its transient response properties.
The relationship between the input and the output for the linear time-invariant system shown in Fig. 1 can be written as the convolution of the input signal and the impulse response of the system:

$$v_o(t) = \int_{-\infty}^{t} v_i(x)h(t-x)dx \qquad (1)$$

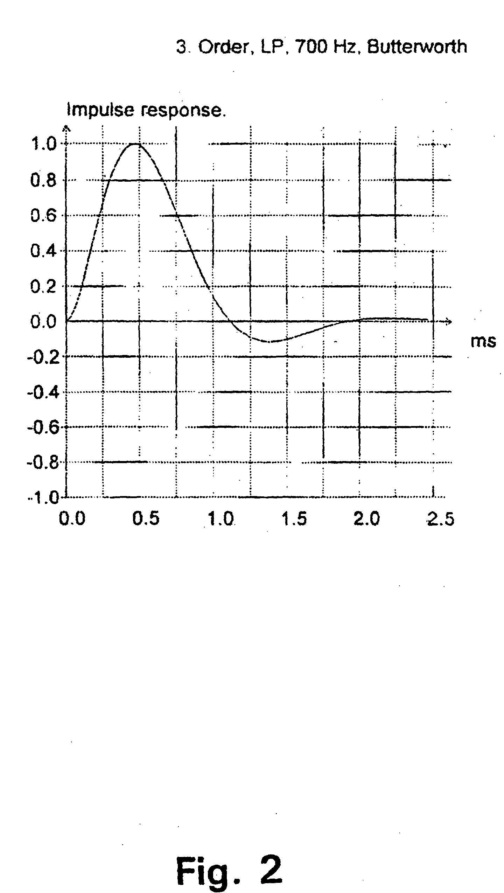

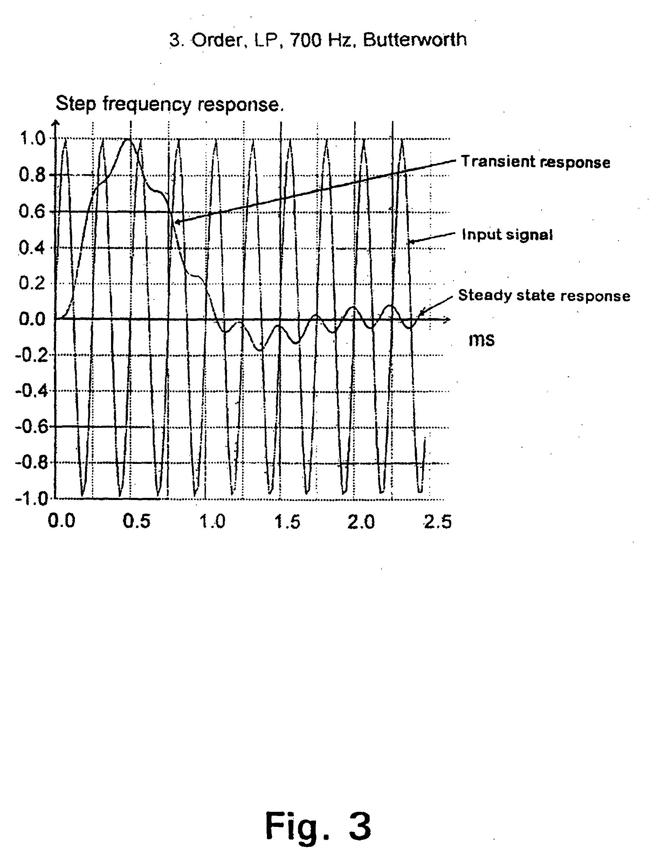

If the system is initially relaxed and the input signal $v_i(t)$ is zero for $t < 0$ then the lower integration limit of Eq. (1) can be replaced with zero. Eq. (1) then shows the important role played by the impulse response in terms of the actual signal processing that is performed by the system. It states that the input signal is weighted or multiplied by the impulse response at every instant in time and, at any specific point in time, the output is the summation or integral of all past weighted inputs.
The impulse response of a real system has a finite duration and the transient response has the same duration. Fig. 2 shows the impulse response of a Butterworth low-pass filter of 3. order and a cut-off frequency at 700 Hz. Fig. 3 shows the response with the filter relaxed for $t < 0$ and with a 4000 Hz tone as input at $t \geq 0$.
In many processes $v_i(t)$ will be a pulse with a short duration and $v_i(t) \approx 0$ before the next pulse will be generated.
The Laplace transform of a signal $v(t)$ is defined by

$$L(s) = \int_{0}^{\infty} v(t)e^{-st}dt \qquad (2)$$

$$= \int_{0}^{\infty} v(t)e^{-(\sigma+j\omega)t}dt$$

If $v(t)$ is the impulse response $h(t)$ for a system with 2 complex poles

$$h(t) = e^{-(\sigma_0+j\omega_0)t} + e^{-(\sigma_0-j\omega_0)t} , t > 0 \qquad (3)$$

and 0 for $t < 0$ and $s \neq -(\sigma_0 \pm j\omega_0)$.
The Laplace transform is

$$H(s) = \frac{s + \sigma_0}{(s + \sigma_0 + j\omega_0)(s + \sigma_0 - j\omega_0)}$$

or

$$H(\sigma,\omega) = \frac{\sigma + \sigma_0 + j\omega_0}{(\sigma + \sigma_0 + j(\omega + \omega_0))(\sigma + \sigma_0 + j(\omega + \omega_0))} \qquad (4)$$

From Eq.(4) it is seen that for $(\sigma,\omega) \to (-\sigma_0,\pm\omega_0)$, $H(\sigma,\omega) \to \pm\infty$.
This is a well-known phenomenon and a logical consequence of this is as follows:

If the signal analysed is dominated by the impulse response of the system generating the signal, it is possible to determine the natural time constants and frequencies for the system.

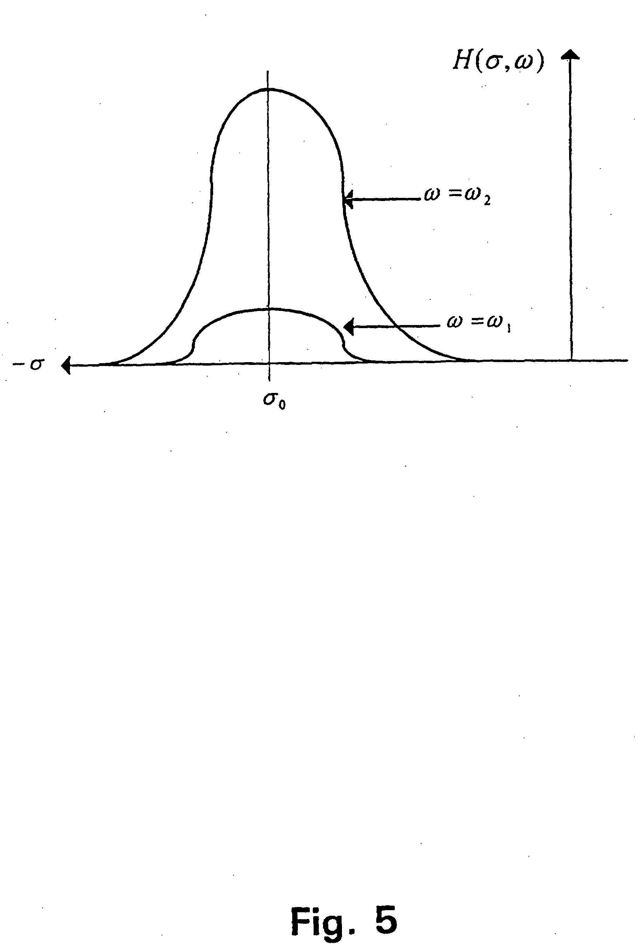

Fig. 5 shows a plot of $H(\sigma,\omega)$ for $\omega = \omega_1$ and $\omega = \omega_2$.

Analysing a signal along or parallel with the $j\omega$ axis will give a frequency profile for a given $\sigma$.

Analysing a signal along or parallel with the $\sigma$ axis will give a time constant profile for a given $j\omega$.

If a signal has a time constant profile with significant variations for specific frequencies, the signal is transient dominated. Opposite if the signal does not vary significantly for any frequency, the signal is steady state dominated.

A short time Laplace transform is defined by:

$$L(\sigma,\omega,t) = \int_0^t v_i(t - \lambda)e^{-(\sigma+j\omega)\lambda}d\lambda \qquad (5)$$

in which $v_I$ is the signal, L is the transformed signal, $\sigma$ is a time constant, and $\omega$ is an angular frequency.

It is not possible to calculate the short time Laplace transform in the same way as DFT in the discrete time domain because two arbitrary exponential functions, $e^{at}$ and $e^{bt}$, are not orthogonal with respect to each other.

The short time Fourier analysis in the analogue time domain is based on a filter bank method. In this paper an equivalent method will be developed for the Laplace transform.

From Eq. (1) and Eq. (3):

$$v_o(t) = \int_0^t v_i(t - \lambda)e^{-(\sigma+j\omega)\lambda}d\lambda$$

$$+ \int_0^t v_i(t - \lambda)e^{-(\sigma-j\omega)\lambda}d\lambda \qquad (6)$$

$$v_o(t) = V(\sigma,\omega,t) + V^*(\sigma,\omega,t) = u(t) + u^*(t)$$

where $u^*(t)$ is the complex conjugate of $u(t)$ and we have

$$\mathrm{Re}\left[L(\sigma,\omega,t)\right] = \tfrac{1}{2}v_o(t) \qquad (7)$$

From Eq. (6) and Eq. (7) it is seen that filtering the signal $v_i(t)$ by a filter with the impulse response $h(\sigma,\omega,t)$ with 2 complex poles will represent the reel part of the short time $L(\sigma,\omega,t)$ transform.

If we let $v_i(t)$ be equal to the impulse response of a single pole we have

$$u(t) = \int_0^t ke^{-(\sigma_o+j\omega_o)(t-\lambda)}e^{-(\sigma+j\omega)\lambda}d\lambda$$

$$= ke^{-(\sigma_o+j\omega_o)t}\int_0^t e^{(\sigma_o+j\omega_o)\lambda}e^{-(\sigma+j\omega)\lambda}d\lambda \qquad (8)$$

$$= \frac{k(e^{-(\sigma+j\omega)t} - e^{-(\sigma_o+j\omega_o)t})}{(\sigma-\sigma_0) + j(\omega-\omega_0)}$$

and from Eq. (7) we have

$$v_o(t) = - \frac{2k(\sigma - \sigma_0)(e^{-\sigma t}\cos(\omega t) - e^{-\sigma_0 t}\cos(\omega_0 t))}{(\sigma - \sigma_0)^2 + (\omega - \omega_0)^2}$$

$$+ \frac{2k(\omega - \omega_0)(e^{-\sigma t}\sin(\omega t) - e^{-\sigma_0 t}\sin(\omega_0 t))}{(\sigma - \sigma_0)^2 + (\omega - \omega_0)^2} \tag{9a}$$

or

$$\frac{v_o(t)}{2k} = \frac{e^{-\sigma_0 t}((\sigma - \sigma_0)\cos(\omega_0 t) - (\omega - \omega_0)\sin(\omega_0 t))}{(\sigma - \sigma_0)^2 + (\omega - \omega_0)^2}$$

$$\frac{-e^{-\sigma t}((\sigma - \sigma_0)\cos(\omega t) - (\omega - \omega_0)\sin(\omega t))}{(\sigma - \sigma_0)^2 + (\omega - \omega_0)^2} \tag{9b}$$

Eq. (9) is not defined for $(\sigma,\omega)=(\sigma_0,\omega_0)$ but from (8) we have in this case

$$u(t) = ke^{-(\sigma_0 + j\omega_0)t}\int_0^t d\lambda$$

$$= kte^{-(\sigma_0 + j\omega_0)t}$$

and

$$v_o(t) = 2kte^{-\sigma_0 t}\cos(\omega_0 t) \tag{10}$$

and we have $v_o(t) \to 0$ for $t \to \infty$.

Eq. (9) shows that the gain is inversely related to $\sigma-\sigma_0$ and $\omega-\omega_0$, and when $(\sigma_0,\omega_0)$ is far from $(\sigma,\omega)$ and $e^{-\sigma t}-e^{-\sigma_0 t}$ is small, $v_o(t) \approx 0$. For $(\sigma_0,\omega_0) \leftarrow (\sigma,\omega)$ $v_o(t)$ will have Eq. (10) as the limit. It is not immediately to see if Eq. (9) has the maximum energy for $(\sigma_0,\omega_0) \leftarrow (\sigma,\omega)$.

In the DC domain Eq. (9) can be written as

$$v_o(t) = 2k\frac{(e^{-\sigma_0 t} - e^{-\sigma t})}{\sigma - \sigma_0} \tag{11}$$

The maximum for $v_o(t)$ can be found as follows

$$\frac{dv_o}{dt} = \frac{1}{\sigma - \sigma_0}\left[\sigma e^{-\sigma t} - \sigma_0 e^{-\sigma_0 t}\right] = 0$$

when

$$t_m = \frac{\log(\sigma) - \log(\sigma_0)}{\sigma - \sigma_0} \tag{12}$$

and Eq. (11) will have the maximum for this value.

It can be shown that $t_m \to \dfrac{1}{\sigma_0}$ when $\sigma \to \sigma_0$.

When $\sigma \approx \sigma_0$ we will have the approximated maximum with $t = \dfrac{1}{\sigma_0}$

$$v_o\left(\frac{1}{\sigma_0}\right) = 2k\,\frac{(e^{-1} - e^{-\frac{\sigma}{\sigma_0}})}{\sigma - \sigma_0} \tag{13}$$

From Eq. (13) it can be shown that

$$v_o \to \frac{2ke^{-1}}{\sigma_0} \text{ for } \sigma \to \sigma_0$$

In Eq. (11) $e^{-\sigma_0 t}$ represent the signal to be analysed and $e^{-\sigma t}$ the filter. Table 1 shows the result with a filter having $\sigma = 100$ s$^{-1}$ and the signal varying from 1 to 1000 s$^{-1}$

It is not surprising that the convolution acts as a low-pass filter. The important fact is that the exponential function in the DC domain in some way acts as frequencies do in the frequency domain.

In table 1 $v_{ol}(t_m)$ is the result of a convolution where the signal is differentiated. The result is, as expected, a high-pass filter.

If we look on Eq.(9a) without exponential functions it can be written as

$$v_0(t) = \frac{2k(\sin(\omega t) - \sin(\omega_0 t))}{\omega - \omega_0} \tag{14}$$

it is seen that for $\omega \to \infty$ we will have $v_o \to 0$.

Table 1

| $v_o(t_m)$ is given by Eq. (11, 12) and normalised by $\sigma$ and 2k. $v_{ol}(t_m)$ is a convolution where the signal is differentiated and normalised by 2k. | | | |
|---|---|---|---|
| $\sigma$ : 100 s$^{-1}$ | | | |
| $\sigma_0$ | $t_m$ | $v_o(t_m)$ | $v_{ol}(t_m)$ |
| s$^{-1}$ | s | | |
| 1 | 0,046516871 | 0,954548457 | 0,009545485 |
| 10 | 0,025584279 | 0,774263683 | 0,077426368 |
| 100 | 0,010000000 | 0,367879441 | 0,367879441 |
| 1000 | 0,002558428 | 0,077426368 | 0,774263683 |
| 10000 | 0,000465169 | 0,009545485 | 0,954548457 |

For $\omega << \omega_0$ we will have

$$v_o \cong \frac{2k(\sin(\omega t) - \sin(\omega_0 t))}{\omega_0} \tag{15}$$

It can be shown that for $\omega \to \omega_0$ we will have

$$v_o(t) \to 2kt\,\cos(\omega_0 t) \tag{16}$$

This result is as expected unstable.

In transient analysis only the beginning of the signal is of interest, and if $\omega_0 >> 1$ Eq. (14) will act as a band-pass filter.

Speech processing is based on fast energy pulse generated by the vocal cords or by friction in the articulation channel weighted by the impulse response in the articulation channel. The rise time for the excitation pulses has to be sufficient faster than the rise time of the energy of the impulse response.

The shape of energy pulses are important features in speech. If the time between the pulses is periodical it is voiced speech, and if not it is unvoiced speech. For some phonemes abrupt changes in the energy pulses are important.

From WO 94/25958 it is known that the shape of the energy pulses are important for speech recognition, especially the leading edge. In the following a method to extract features will be developed based on an envelope detection.

The convolution expressed in Eq.(9) can be regarded as a response from 2 poles in the articulation channel excited by an impulse. If $\sigma_0 \approx \sigma$ we have from Eq. (9a)

$$v_o(t) \cong \frac{e^{-\sigma t}}{(\omega - \omega_0)}\left(\sin(\omega t) - \sin(\omega_0 t)\right) \qquad (17)$$

The envelope is defined as

$$e(t) = \sqrt{u^2(t) + \hat{u}^2(t)}$$

where

$$\hat{u}(t) = u(t) * \frac{1}{\pi t}$$

is the Hilbert Transform.

The envelope of Eq.(17) is then

$$e_o(t) = \frac{e^{-\sigma t}}{\left|\omega - \omega_0\right|}\sqrt{(\sin(\omega t) - \sin(\omega_0 t))^2 + (-\cos(\omega t) + \cos(\omega_0 t))^2}$$

$$= \frac{e^{-\sigma t}}{\left|\omega - \omega_0\right|}\sqrt{2(1 - \cos(\omega - \omega_0)t)}$$

$$\cong \frac{\sqrt{2}e^{-\sigma t}}{\left|\omega - \omega_0\right|}\left(1 - \tfrac{1}{2}\cos((\omega - \omega_0)t)\right) \qquad (18)$$

The approximation is acceptable because $|\cos((\omega-\omega_0)t)| \leq 1$

As expected the envelope has a component with the difference frequency of the 2 frequencies.

The conclusion is that we can expect to find damped difference frequencies in the envelope of the transient component.

To detect the damped difference frequencies a filter bank is used. The features might be detected as a convolution between the transient pulse and the impulse response of the filters.

In general form the impulse response can be written as

$$h(t) = ke^{-\lambda t}\sin(f(\lambda)t + \phi)$$

Where σ=λ and ω = $f(\lambda)$.

In the following analysis $f(\lambda)$ = 1.5λ, $k$ = ω = 1.5λ, and ϕ=0 are selected and we have

$$h(t) = 1.5\lambda e^{-\lambda t} \sin(15\lambda t) \tag{19}$$

By selecting ω = 1.5σ Eq. (19) will act as a band-pass filter with a low Q in relation to the frequencies. Other ratios ω/σ than 1.5 may be selected and it is presently preferred that the ratio (ω/σ) ranges from 0.5 to 2.5. The exponential function gives the advance that it acts like natural time window that ensure that the signal is natural damped. The value of the parameters are selected by studying rise times in important transient pulses and by experiments.

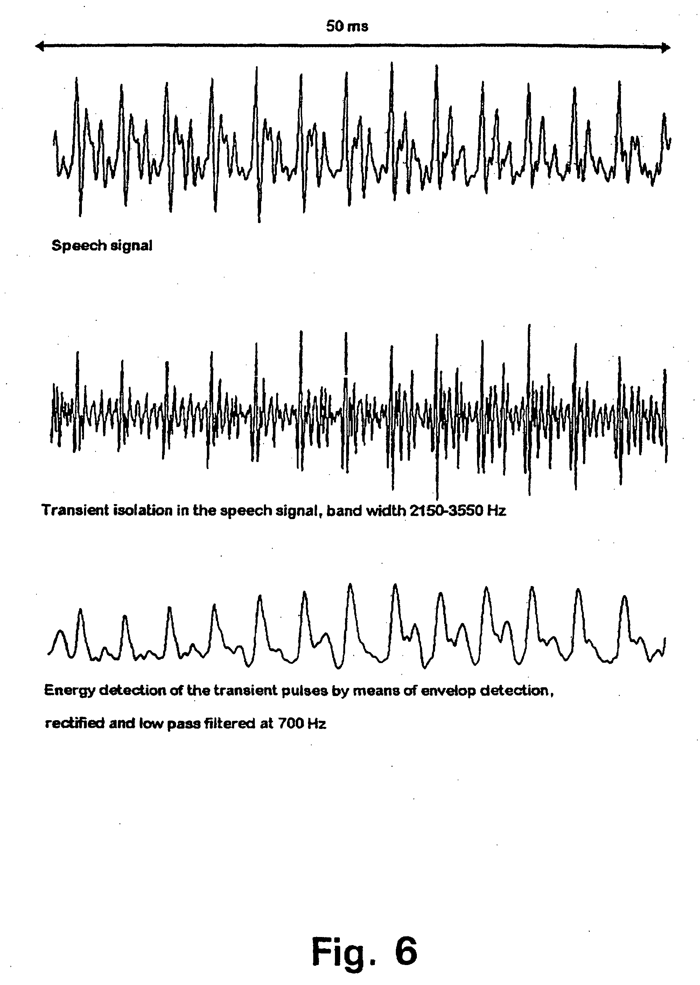

Fig. 6 shows transient characteristics in speech signals. The top figure shows 50 ms of an °a" in "hard key" pronounced by a female.

The second signal is a band-pass filtration of the speech signal. The band-pass filter is a Butterworth filter with 6 poles and a band width from 2150 to 3550 Hz. This frequency band contains important transient pulses in the sensitive frequency interval of the ear.

The third signal is a energy detection of the transient characteristics of the band-pass filtered speech signal. The detection is an envelope detection performed by means of a rectification and a low-pass filtration of the signal. The filter is a Butterworth filter with 3 poles and a cut-off frequency at 700 Hz.

In WO 97/09712 a method for automatically detecting the leading edges is disclosed. The method uses the maximum slope of the leading edge as reference, and the point before the maximum slope where the slope is less than a given threshold (10-20 % of the maximum slope) the leading edge is defined to begin.

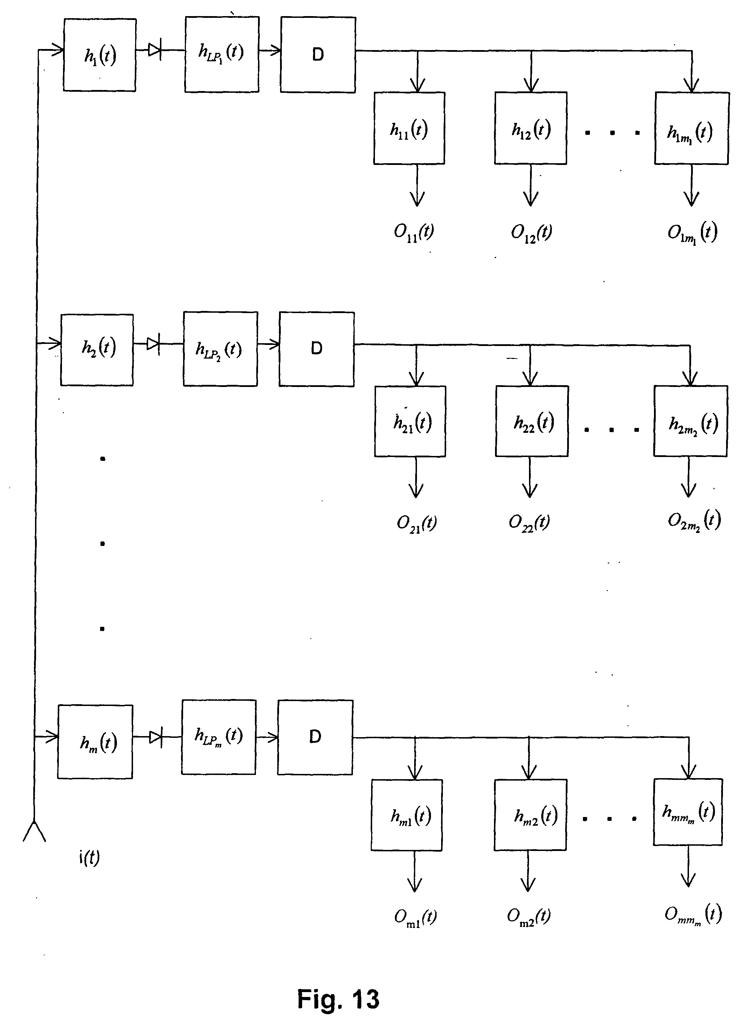

The transient (envelope) signal in Fig.(6) has a DC component, which does not contain any information. Therefore it is preferred that the signal is differentiated before it is analysed e.g. by the filter bank shown in Fig. 13.

In Fig. 13, the filters ($h_1(t)$, $h_2(t)$, ..., $h_n(t)$) in the filter bank connected between the input and the envelope detectors are band-pass filters having bandwidths corresponding to the bandwidths of the band-pass filters of the cochlea and having centre frequencies ranging from 1400 Hz to 6500 Hz.

The output signals $o_{ij}(p)$ from the filter bank shown in Fig. 13 is calculated by:

$$h_{rj}(p) = 1.5\lambda_m e^{-\lambda_m p} \sin(\lambda_m p),$$

i=0,1,...,N-1
j=0,1,...,M-1

$$h_{ij}(p) = 0,$$

p < 0

$$o_{ij}(p) = \sum_{k=0}^{P-1} t'(k) h_m(p-k),$$

p=0,1,..., P-1

m=0,1, ..., M-1 and M is the number of band-pass filters with a low Q in the filter bank connected between the outputs and the envelope detectors, p = 0,1,...,P-1 is the sample number, t' is the differentiated transient signal, and $\lambda_m$ is the filter bank parameter and it is normalised by the sampling frequency.

In the analysis M is selected to 10 and $1500 \leq \lambda'_m \leq 12000$ s$^{-1}$, $\lambda'_m$ is not normalised. By this we have $1885 \leq \omega_m \leq 18850$ s$^{-1}$ or $300 \leq f_m \leq 3000$ Hz.

This filtering process is not done in the cochlea but in the hair cells or in the nerve system behind the hair cells.

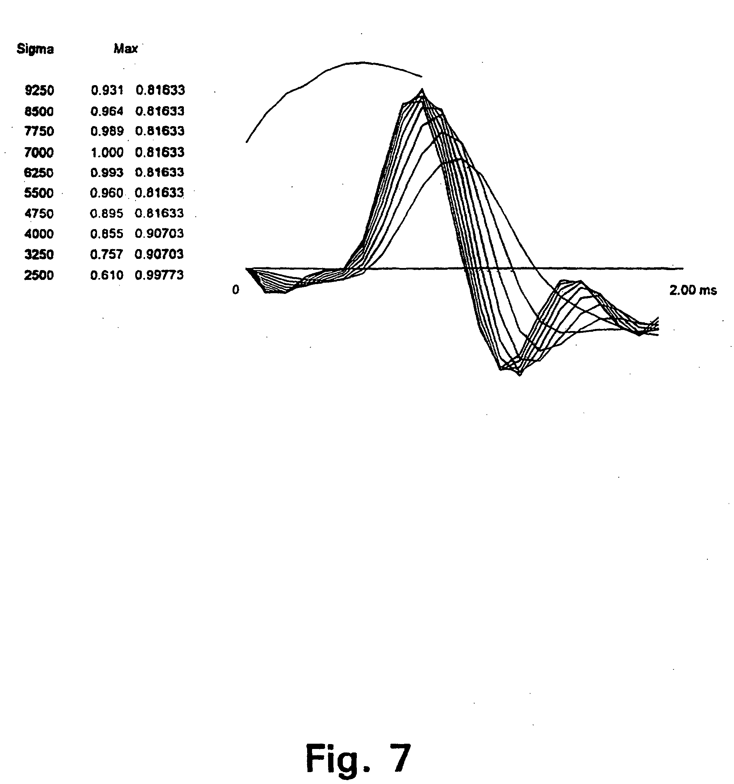

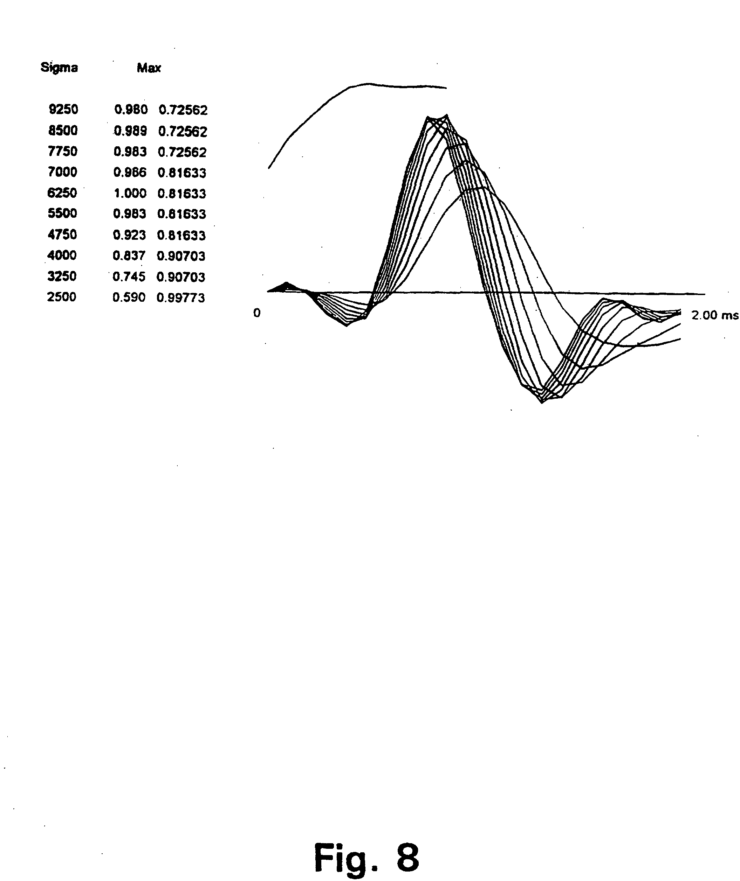

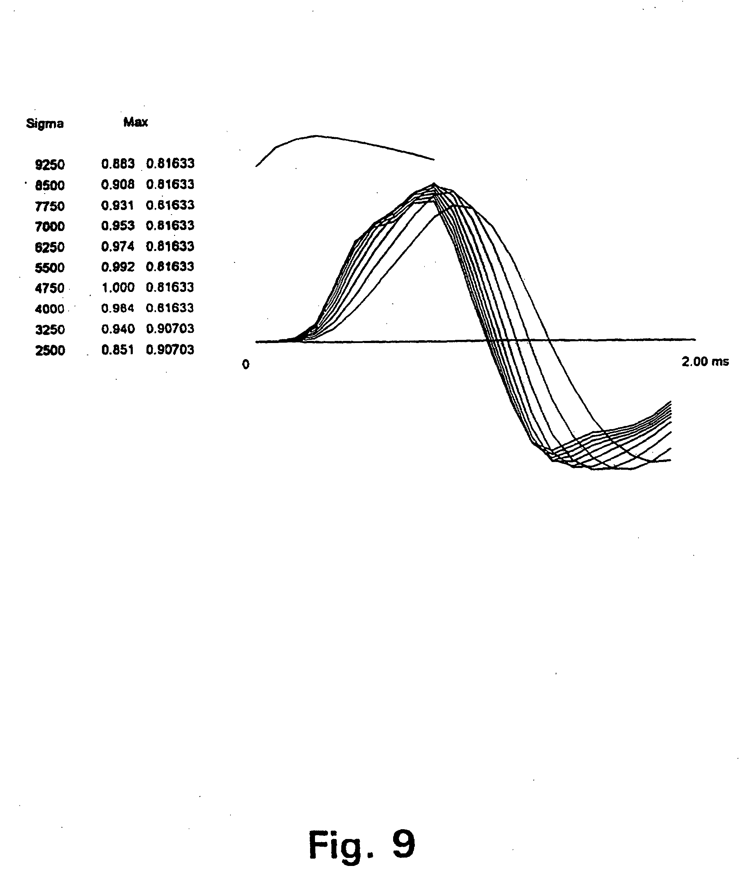

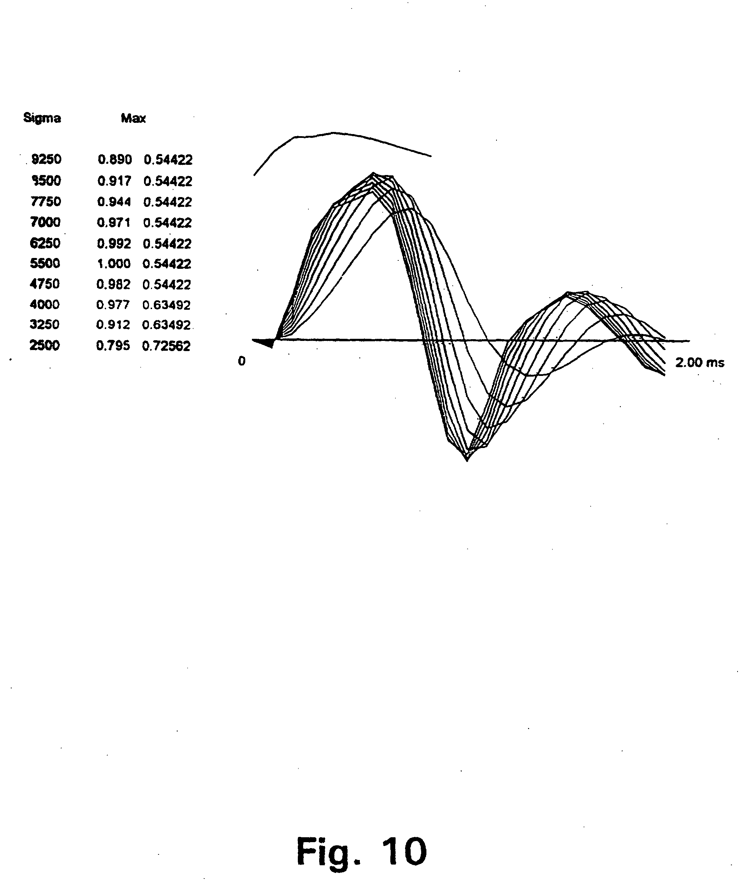

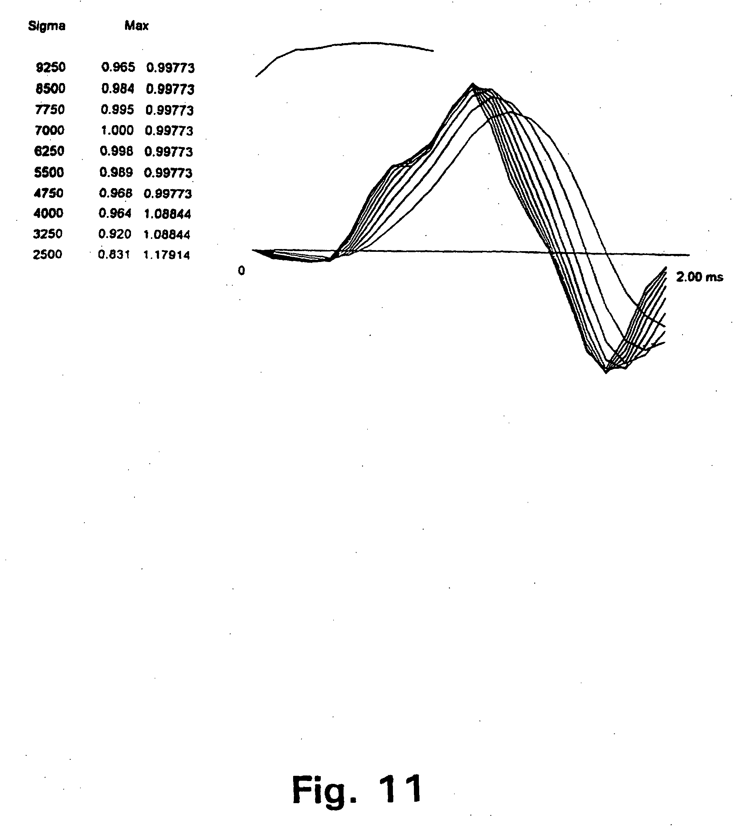

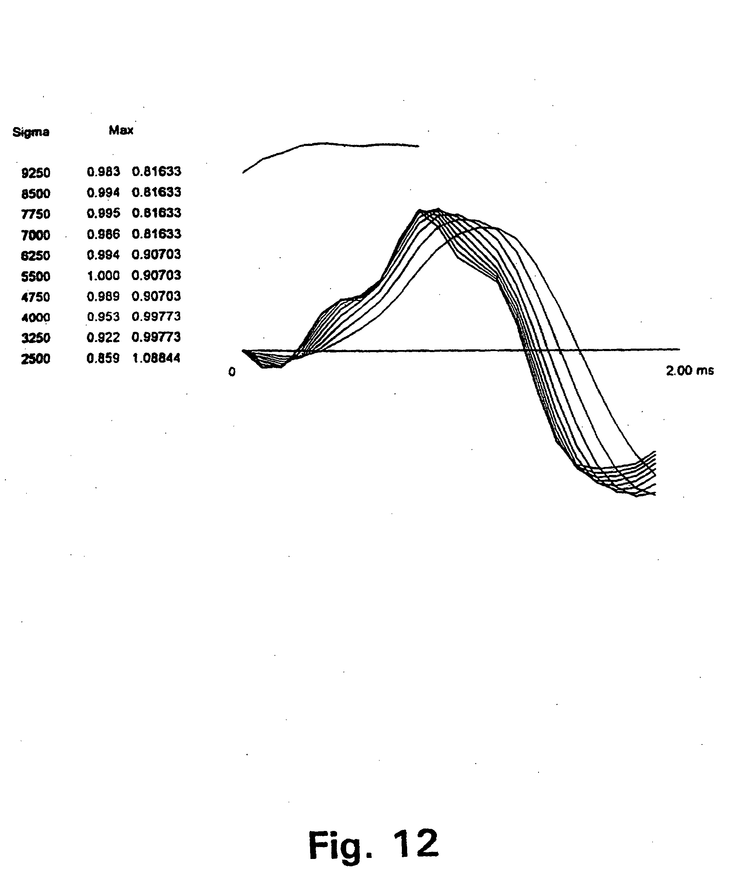

The Figs. 7, 8, 9, 10, 11, and 12 show the output of the processing of transient signals in the vowels "a", "o", "i" in "hard key" and "soft key" pronounced by a female and a male. Further the figures show plots of maxima of the output signals as a function of the time constant σ of the corresponding filter.

The figures show that maximum curves are very much alike for the same vowels, independent of whether a female or male pronounces it.

With a library of templates and a distance measure it is possible to identify the sound picture, and it can be used for speech recognition and narrow band communication.

Thus, according to the invention a method and an apparatus are provided for determination of a parameter of a system generating a signal containing information about the parameter, in which the signal is short time transformed substantially in accordance with

$$L(\sigma,\omega,t) = \int_0^t v_i(t-\lambda)e^{-(\sigma+j\omega)\lambda+\varphi}d\lambda$$

in which $v_I$ is the signal, L is the transformed signal, $\sigma$ is a time constant, $\omega$ is an angular frequency, and $\varphi$ is a phase, or, in accordance with another transformation which will give rise to an L'$(\sigma,\omega,t)$ which in time intervals within which L$(\sigma,\omega,t)$ is larger than 10% of its maximum value is not more than 50% different from the result given by the short time Laplace transformation.

In narrow band communication the transient pulses have to be identified and coded, and the decoder will contain a library of filters with corresponding transient responses. The decoder library could also contain the transient responses.

The present invention also relates to measurement of mechanical vibrations e.g. when testing devices that generate mechanical energy during operation, such as mechanical devices with moving parts, such as compressors for refrigerators, electric motors, household machines, electric razors, combustion engines, etc, etc.

For example, it is known that measurement of vibration generated or sound emitted by a device during operation can be useful for detection of malfunction of the device. Certain failures may generate sound or vibration of specific characteristics that can be recognised.

The method may also comprise steps of classification for classifying a tested device in accordance with the determined parameters into one class of a set of predefined classes. Each predefined class may be defined by a set of upper and lower limits for specific parameters determined according to the method. A device may then be classified as belonging to a certain class if its corresponding parameter values lie within corresponding upper and lower limits of the class.

Each class may correspond to a specific type of failure of the device. For example, shaft imbalance, wheel imbalance, crookedness, imperfections of teeth in cogs, tight bearing, loose bearings, etc, may cause the device to vibrate in different characteristic ways, whereby a characteristic mechanical vibration or sound is generated for each type of failure. The type of failure of the device may then be detected by comparing determined device parameters with corresponding parameter values of various predetermined classes.

The upper and lower limits of a specific class of devices may be determined by testing a set of devices known to belong to that class. For example, the upper limits may be determined as the average of specific parameter values plus three times the standard deviation. Likewise, the lower limits may be determined as the average of parameter values minus three times the standard deviation.

## Claims

1. A method for determination of a parameter of a system generating a signal containing information about the parameter, comprising the step of short time transforming the signal substantially in accordance with

$$L(\sigma,\omega,t) = \int_0^t v_i(t-\lambda)e^{-(\sigma+j\omega)\lambda+\varphi}d\lambda$$

   in which $v_I$ is the signal, L is the transformed signal, $\sigma$ is a time constant, $\omega$ is an angular frequency, and $\varphi$ is a phase.

2. A method according to claim 1, wherein the step of transforming comprises filtering the signal $v_i$ with a filter having a pole at $\sigma + j\omega t$ and a pole at $\sigma - j\omega t$.

3. A method according to claim 1 or 2, comprising steps of transforming the signal $v_i$ for a plurality of sets of $\sigma$ and

ω values.

4.  A method according to any of the preceding claims, further comprising the step of determining a maximum of at least one transformed signal $L(\sigma,\omega,t)$.

5.  A method according to any of the preceding claims, further comprising the step of comparing transformed signals L with corresponding reference signals in order to determine parameters of the system.

6.  A method according to any of the preceding claims, further comprising a step of pre-processing the signal before the step of short time transforming, the pre-processing being selected from the group consisting of filtering, rectification, differentiation, integration, and amplification.

7.  A method of transmitting a signal containing information of a set of parameters of a system generating the signal, comprising processing the signal according to any of the preceding claims and further comprising the step of transmitting the determined parameter values.

8.  A method according to claim 7 further comprising the step of generating a copy of the signal from the transmitted parameter values.

9.  A method of transmitting a signal containing information of a set of parameters of a system generating the signal, comprising processing the signal according to any of the preceding claims and further comprising the steps of comparing the signal with a library of signals generated for a predetermined set of parameter values by the system, selecting the library function that constitutes the best match to the signal, and transmitting an identification signal that identifies the matching library function.

10. A method according to claim 9, further comprising the steps of receiving the identification signal and generating the corresponding library signal.

11. A method of classifying a system according to one or more parameters of the system generating a signal containing information about the one or more parameters, comprising determining the one or more parameters according to any of claims 1-6 and further comprising the step of classifying the system in accordance with the one or more determined parameters into one class of a set of predefined classes defined by predetermined ranges of values of the parameters.

12. A method for communicating an auditory signal, comprising processing the signal by the method according to any of claims 1-6, transmitting the processed signal, and receiving the processed signal by a receiver.

13. A method according to claim 12, wherein, prior to transmission of the processed signal, the signal is coded into a digital representation, and the coded signal is decoded in the receiver so as to reestablish transient pulse shapes perceived by an animal ear such as a human ear as representing the distinct sound pictures of the auditory signal.

14. A method according to claim 13, wherein the digital transmission is performed at a bandwidth of at the most 4000 bits per second.

15. A method according to claim 14, wherein the bandwidth is at the most 2000 bits per second.

16. A method according to claim 15, wherein the bandwidth is in the interval of 800-2000 bits per second.

17. A method according to any of claims 13-16, wherein a second and further pulses in a sequence of identical pulses are represented by a digital value indicating repetition.

18. A method according to any of claims 1-6, comprising filtering the signal $v_l$ in a filter bank comprising a plurality of band-pass filters interconnected in parallel with centre frequencies ranging from 1400 Hz to 6500 Hz, each of which is connected in series with an envelope detector and a filter bank comprising a plurality of low-pass filters interconnected in parallel and having cut-off frequencies ranging from 300 Hz to 3000 Hz and time constants $\sigma$ ranging from 1500 $s^{-1}$ to 12000 $s^{-1}$.

19. An apparatus for determination of a parameter of a system generating a signal containing information about the parameter, comprising a processor that is adapted to short time transform the signal substantially in accordance with

$$L(\sigma,\omega,t) = \int_0^t v_l(t-\lambda)e^{-(\sigma+j\omega)\lambda+\varphi}d\lambda$$

in which $v_l$ is the signal, L is the transformed signal, $\sigma$ is a time constant, $\omega$ is an angular frequency, and $\varphi$ is a phase.

20. An apparatus according to claim 19, wherein the processor comprises a filter for filtering the signal $v_i$ and having a pole at $\sigma + j\omega t$ and a pole at $\sigma - j\omega t$.

21. An apparatus according to claim 19 or 20, wherein the processor comprises a plurality of filters for filtering the signal $v_i$, each filter having a different set of $\sigma$ and $\omega$ values.

22. An apparatus according to claim 19, wherein the apparatus comprises a communication channel transmitter, and the processor is adapted to determine the one or several parameters of the system, and
to transmit the one or several system parameters over a wireless or a cable communication channel.

**Patentansprüche**

1. Verfahren zur Bestimmung eines Parameters eines Systems, das ein Signal mit Information über den Parameter erzeugt, mit einem Schritt einer Fenster-Transformation (Short Time Transform) des Signals im wesentlichen entsprechend

$$L(\sigma,\omega,t) = \int_0^t v_l(t-\lambda)e^{-(\sigma+j\omega)\lambda+\varphi}d\lambda$$

wobei $v_1$ das Signal, L das transformierte Signal, $\sigma$ eine Zeitkonstante, $\omega$ eine Kreisfrequenz und $\phi$ eine Phase bezeichnet.

2. Verfahren nach Anspruch 1, bei dem der Schritt der Transformation eine Filterung des Signals $v_1$ mit einem Filter umfasst, der eine Polstelle bei $\sigma+j\omega t$ und eine Polstelle bei $\sigma-j\omega t$ hat.

3. Verfahren nach Anspruch 1 oder 2, mit den Schritten der Transformation des Signals $v_1$ für eine Mehrzahl von Gruppen von Werten von $\sigma$ und $\omega$.

4. Verfahren nach einem der vorstehenden Ansprüche, mit einem zusätzlichen Schritt des Bestimmens eines Maximums mindestens eines transformierten Signals L $(\sigma,\omega,t)$.

5. Verfahren nach einem der vorstehenden Ansprüche, mit einem zusätzlichen Schritt des Vergleichens transformierter Signale L mit entsprechenden Referenz-Signalen zum Bestimmen von Parametern des Systems.

6. Verfahren nach einem der vorstehenden Ansprüche, mit einem zusätzlichen Schritt der Vorverarbeitung des Signals vor dem Schritt der Fenster-Transformation, wobei die Vorverarbeitung eine Filterung, Gleichrichtung, Ableitung, Integration und/oder Verstärkung sein kann.

7. Verfahren zur Übertragung eines Signals mit Information über eine Gruppe von Parametern eines Systems, dass das Signal erzeugt, umfassend die Verarbeitung des Signals gemäß einem der vorstehenden Ansprüche und einen weiteren Schritt des Übertragens der bestimmten Parameterwerte.

8. Verfahren nach Anspruch 7, mit einem zusätzlichen Schritt der Erzeugung einer Kopie des Signals aus den übertragenen Parameterwerten.

9. Verfahren zum Übertragen eines Signals mit Information aus einer Gruppe von Parametern eines Systems, die das Signal erzeugen, umfassend eine Verarbeitung des Signals gemäß einem der vorstehenden Ansprüche und die weiteren Schritte
Vergleichen des Signals mit einer Bibliothek von Signalen, die für eine vorbestimmte Gruppe von Parameterwerten durch das System erzeugt wurden,
Auswählen der Bibliotheks-Funktion, die dem Signal am nächsten kommt, sowie
Übermitteln eines Identifizierungssignals, das die am nächsten kommende Bibliotheksfunktion identifiziert.

10. Verfahren nach Anspruch 9 mit den weiteren Schritten des Empfangens des Identifizierungssignals und des Erzeugens des entsprechenden Bibliotheks-Signals.

11. Verfahren zum Klassifizieren eines Systems nach einem oder mehreren Parametern des Systems, das ein Signal erzeugt, das Information über den bzw. die Parameter enthält, umfassend das Bestimmen des bzw. der Parameter gemäß einem der Ansprüche 1-6 sowie den weiteren Schritt des Klassifizierens des Systems entsprechend dem bzw. den bestimmten Parametern in eine Klasse aus einer Gruppe vorbestimmter Klassen, die durch vorbestimmte Wertebereiche der Parameter definiert sind.

12. Verfahren zum Kommunizieren eines auditiven Signals, umfassend eine Verarbeitung des Signals mit einem Verfahren gemäß einem der Ansprüche 1-6, Übermitteln des verarbeiteten Signals und Empfangen des verarbeiteten Signals durch einen Empfänger.

13. Verfahren nach Anspruch 12, bei dem vor der Übermittlung des verarbeiteten Signals das Signal in eine digitale Darstellung kodiert wird und das kodierte Signal beim Empfänger dekodiert wird, so dass transiente Pulsformen wieder hergestellt werden, die vom Ohr eines Lebewesens wie dem menschlichen Ohr so wahr genommen werden, dass sie die distinkten Klangbilder des auditiven Signals repräsentieren.

14. Verfahren nach Anspruch 13, bei dem die digitale Übertragung mit einer Bandbreite von maximal 4000 Bit/s durchgeführt wird.

15. Verfahren nach Anspruch 14, bei dem die Bandbreite maximal 2000 Bit/s beträgt.

16. Verfahren nach Anspruch 15, bei dem die Bandbreite im Bereich von 800-2000 Bit/s liegt.

17. Verfahren nach einem der Ansprüche 13-16, bei dem ein zweiter und weitere Pulse in einer Sequenz identischer Pulse durch einen digitalen Wert repräsentiert werden, der Wiederholung anzeigt.

18. Verfahren nach einem der Ansprüche 1-6, umfassend eine Filterung des Signals $v_1$ in einer Filterbank mit einer Vielzahl von Bandpass-Filtern, die untereinander parallel verbunden sind und Mittenfrequenzen im Bereich von 1400 Hz-6500 Hz aufweisen, wobei jeder Bandpassfilter in Reihe mit einem Einhüllenden- Detektor und einer Filterbank mit einer Mehrzahl von Tiefpass-Filtern verbunden ist, die Grenzfrequenzen im Bereich von 300 Hz-3000 Hz sowie Zeitkonstanten σ im Bereich von 1500 $s^{-1}$ bis 12000 $s^{-1}$ aufweisen.

19. Vorrichtung zum Bestimmen eines Parameters eines Systems, das ein Signal mit Informationen über den Parameter erzeugt, umfassend einen Prozessor, der ausgebildet ist zur Fenster-Transformation (Short Time Transform) des Signals im wesentlichen entsprechend der Beziehung

$$L(\sigma,\omega,t) = \int_0^t v_1(t-\lambda)e^{-(\sigma+j\omega)\lambda+\varphi}d\lambda$$

wobei $v_i$ das Signal, L das transformierte Signal, σ eine Zeitkonstante, ω eine Kreisfrequenz und φ eine Phase bezeichnet.

20. Vorrichtung nach Anspruch 19, bei der der Prozessor einen Riter zum Filtern des Signals $v_1$ umfasst, der eine

Polstelle bei σ+jωt und eine Polstelle bei σ-jωt hat.

**21.** Vorrichtung nach Anspruch 19 oder 20, bei der Prozessor eine Mehrzahl von Filtern zum Filtern des Signals $v_1$ umfasst und jeder Filter eine unterschiedliche Gruppe von σ- und ω-Werten aufweist.

**22.** Vorrichtung nach Anspruch 19, die einen Sender für einen Kommunikatlonskanal umfasst und bei der der Prozessor ausgebildet ist. den oder die Parameter des Systems zu bestimmen und den bzw. die Systemparameter durch einen drahtlosen oder einen Kabel-Kommunikationskanal zu übertragen.

**Revendications**

**1.** Procédé pour la détermination d'un paramètre d'un système générant un signal contenant une information au sujet du paramètre, comprenant une étape de transformation de courte durée du signal sensiblement selon la relation suivante :

$$L(\sigma,\omega,t)= \int_0^t v_1(t-\lambda)e^{-(\sigma+j\omega)\lambda+\varphi}d\lambda$$

dans laquelle $v_1$ est le signal, L est le signal transformé, σ est une constante de temps, ω est une fréquence angulaire et φ est une phase.

**2.** Procédé selon la revendication 1, selon lequel l'étape de transformation comprend le filtrage du signal $v_i$ à l'aide d'un filtre possédant un pôle à σ + jωt et un pôle à σ - jωt.

**3.** Procédé selon la revendication 1 ou 2, comprenant des étapes de transformation du signal $v_i$ pour une pluralité d'ensembles de valeurs σ et ω.

**4.** Procédé selon l'une quelconque des revendications précédentes, comprenant de plus une étape de détcrmination d'un maximum d'au moins un signal transformé L(σ,ω,t).

**5.** Procédé selon l'une quelconque des revendications précédentes, comprenant, de plus, une étape de comparaison des signaux transformés L avec des signaux correspondants de référence de façon à déterminer des paramètres du système,

**6.** Procédé selon l'une quelconque des revendications précédentes, comprenant, de plus, une étape de traitement préliminaire du signal avant l'étape de transformation de courte durée, le traitement préliminaire étant sélectionné à partir du groupe comprenant un filtrage, un redressement, une différenciation, une intégration et une amplification.

**7.** Procédé de transmission d'un signal contenant une information sur un ensemble de paramètres d'un système générant le signal, comprenant le traitement du signal selon l'une quelconque des revendications précédentes et comprenant, de plus, une étape de transmission des valeurs déterminées de paramètre.

**8.** Procédé selon la revendication 7, comprenant de plus une étape de génération d'une copie du signal à partir des valeurs transmises de paramètre.

**9.** Procédé de transmission d'un signal contenant une information sur un ensemble de paramètres d'un système générant le signal, comprenant le traitement du signal selon l'une quelconque des revendications précédentes, et comprenant les étapes suivantes :

- la comparaison du signal avec une librairie de signaux générée pour un ensemble prédéterminé de valeurs de paramètre par le système ;

- la sélection de la fonction de librairie constituant la meilleure concordance avec le signal ; et

- la transmission d'un signal d'identification identifiant la fonction de librairie de concordance.

10. Procédé selon la revendication 9, comprenant de plus une étape de réception du signal d'identification et de génération du signal correspondant de librairie.

11. Procédé de classification d'un système selon un ou plusieurs paramètres du système générant un signal contenant une information sur le ou les paramètres, comprenant la détermination du ou des paramètres selon l'une quelconque des revendications 1 à 6, et comprenant, de plus, une étape de classification du système selon le ou les paramètres déterminés en une classe d'un ensemble de classes prédéfinies définie par des intervalles prédéterminés de valeurs des paramètres.

12. Procédé pour la communication d'un signal auditif, comprenant le traitement du signal à l'aide du procédé selon l'une quelconque des revendications 1 à 6, la transmission du signal traité et la réception du signal traité par un récepteur.

13. Procédé selon la revendication 12, selon lequel, avant la transmission du signal traité, le signal est codé en une représentation numérique et le signal codé est décodé dans le récepteur de façon à rétablir des formes d'impulsion transitoire perçues par une oreille animale comme une oreille humaine comme représentant les signatures sonores distinctes du signal auditif.

14. Procédé selon la revendication 13, selon lequel la transmission numérique est effectuée sur une largeur de bande d'au plus 4000 bits par seconde.

15. Procédé selon la revendication 14, selon lequel la largeur de bande est au plus de 2000 bits par seconde.

16. Procédé selon la revendication 15, selon lequel la largeur de bande est comprise entre 800 et 2000 bits par seconde.

17. Procédé selon l'une quelconque des revendications 13 à 16, selon lequel une seconde impulsion et une impulsion supplémentaire d'une séquence d'impulsions identiques sont représentées par une valeur numérique indiquant une répétition.

18. Procédé selon l'une quelconque des revendications 1 à 6, comprenant le filtrage du signal v1 dans une banque de filtrage comprenant une pluralité de filtres passe-bande interconnectés en parallèle avec des fréquences centrales allant de 1400 Hz à 6500 Hz, chacun d'eux étant connecté en série avec un détecteur d'enveloppe et une banque de filtrage comprenant une pluralité de filtres passe-bas interconnectés en parallèle et présentant des fréquences de coupure comprises entre 300 Hz et 3000 Hz et des constantes de temps $\sigma$ comprises entre 1500 $s^{-1}$ et 12000 $s^{-1}$.

19. Dispositif pour la détermination d'un paramètre d'un système générant un signal contenant une information au sujet du paramètre, comprenant un processeur qui est prévu pour une transformation de courte durée du signal sensiblement selon la relation suivante :

$$L(\sigma,\omega,t)=\int_0^t v(t-\lambda)e^{-(\sigma+j\omega)\lambda+\varphi}d\lambda$$

dans laquelle $v_1$ est le signal, L est le signal transformé, $\sigma$ est une constante de temps, $\omega$ est une fréquence angulaire et $\varphi$ est une phase.

20. Dispositif selon la revendication 19, dans lequel le processcur comprend un filtre pour le filtrage du signal $v_i$ et possédant un pôle à $\sigma + j\omega t$ et un pôle à $\sigma - j\omega t$.

21. Dispositif selon la revendication 19 ou 20, dans lequel le processeur comprend une pluralité de filtres pour le filtrage du signal $v_i$, chaque filtre possédant un ensemble différent de valeurs $\sigma$ et $\omega$.

22. Dispositif selon la revendication 19, dans lequel le dispositif comprend un émetteur de canal de communication, et le processeur est prévu pour déterminer un ou plusieurs paramètres du système et pour transmettre le ou les paramètres du système sur un canal de communication sans fil ou câblé.

$$v_i(t) \longrightarrow \boxed{h(t)} \longrightarrow v_o(t)$$

# Fig. 1

3. Order, LP, 700 Hz, Butterworth

Fig. 2

3. Order, LP, 700 Hz, Butterworth

Fig. 3

Fig. 4

Fig. 5

50 ms

Speech signal

Transient isolation in the speech signal, band width 2150-3550 Hz

Energy detection of the transient pulses by means of envelop detection,

rectified and low pass filtered at 700 Hz

# Fig. 6

| Sigma | Max | |
|---|---|---|
| 9250 | 0.931 | 0.81633 |
| 8500 | 0.964 | 0.81633 |
| 7750 | 0.989 | 0.81633 |
| 7000 | 1.000 | 0.81633 |
| 6250 | 0.993 | 0.81633 |
| 5500 | 0.960 | 0.81633 |
| 4750 | 0.895 | 0.81633 |
| 4000 | 0.855 | 0.90703 |
| 3250 | 0.757 | 0.90703 |
| 2500 | 0.610 | 0.99773 |

0                                                          2.00 ms

# Fig. 7

| Sigma | | Max |
|---|---|---|
| 9250 | 0.980 | 0.72562 |
| 8500 | 0.989 | 0.72562 |
| 7750 | 0.983 | 0.72562 |
| 7000 | 0.986 | 0.81633 |
| 6250 | 1.000 | 0.81633 |
| 5500 | 0.983 | 0.81633 |
| 4750 | 0.923 | 0.81633 |
| 4000 | 0.837 | 0.90703 |
| 3250 | 0.745 | 0.90703 |
| 2500 | 0.590 | 0.99773 |

# Fig. 8

| Sigma | Max | |
|-------|-----|-----|
| 9250 | 0.883 | 0.81633 |
| 8500 | 0.908 | 0.81633 |
| 7750 | 0.931 | 0.81633 |
| 7000 | 0.953 | 0.81633 |
| 6250 | 0.974 | 0.81633 |
| 5500 | 0.992 | 0.81633 |
| 4750 | 1.000 | 0.81633 |
| 4000 | 0.984 | 0.81633 |
| 3250 | 0.940 | 0.90703 |
| 2500 | 0.851 | 0.90703 |

0                                                              2.00 ms

# Fig. 9

| Sigma | Max | |
|---|---|---|
| 9250 | 0.890 | 0.54422 |
| 8500 | 0.917 | 0.54422 |
| 7750 | 0.944 | 0.54422 |
| 7000 | 0.971 | 0.54422 |
| 6250 | 0.992 | 0.54422 |
| 5500 | 1.000 | 0.54422 |
| 4750 | 0.982 | 0.54422 |
| 4000 | 0.977 | 0.63492 |
| 3250 | 0.912 | 0.63492 |
| 2500 | 0.795 | 0.72562 |

0                                                              2.00 ms

# Fig. 10

| Sigma | | Max |
| --- | --- | --- |
| 9250 | 0.965 | 0.99773 |
| 8500 | 0.984 | 0.99773 |
| 7750 | 0.995 | 0.99773 |
| 7000 | 1.000 | 0.99773 |
| 6250 | 0.998 | 0.99773 |
| 5500 | 0.989 | 0.99773 |
| 4750 | 0.968 | 0.99773 |
| 4000 | 0.964 | 1.08844 |
| 3250 | 0.920 | 1.08844 |
| 2500 | 0.831 | 1.17914 |

# Fig. 11

| Sigma | Max | |
|---|---|---|
| 9250 | 0.983 | 0.81633 |
| 8500 | 0.994 | 0.81633 |
| 7750 | 0.995 | 0.81633 |
| 7000 | 0.986 | 0.81633 |
| 6250 | 0.994 | 0.90703 |
| 5500 | 1.000 | 0.90703 |
| 4750 | 0.989 | 0.90703 |
| 4000 | 0.953 | 0.99773 |
| 3250 | 0.922 | 0.99773 |
| 2500 | 0.859 | 1.08844 |

0                                                        2.00 ms

# Fig. 12

30

**Fig. 13**